# EUROPÄISCHE PATENTSCHRIFT

(11) **EP 2 647 918 B1**
(45) Veröffentlichungstag und Bekanntmachung des Hinweises auf die Patenterteilung: **12.07.2017**
(21) Anmeldenummer: 13161361.4
(22) Anmeldetag: 27.03.2013
(51) Int. Cl.: F24F 1/00, F24F 1/01

(54) **Einrichtung zum Belüften, zum Heizen und/oder zum Kühlen eines Raumes**
Device for ventilating, heating and/or cooling a room
Dispositif d'aération, de chauffage et/ou de refroidissement d'une pièce

(30) Priorität: 05.04.2012 DE 202012101264 U; 03.05.2012 DE 202012101635 U
(43) Veröffentlichungstag der Anmeldung: 09.10.2013
(73) Patentinhaber: TROX GmbH, 47506 Neukirchen-Vluyn (DE)
(72) Erfinder: Schießer, Falk, 47929 Grefrath (DE); Fey, Michael, 40723 Hilden (DE); Scherder, Dirk, 47798 Krefeld (DE)
(74) Vertreter: Dr. Stark & Partner Patentanwälte mbB

(56) Entgegenhaltungen:
- EP-A1- 0 080 606
- EP-A1- 2 354 687
- DE-A1- 3 148 795
- DE-C1- 3 241 268
- DE-U1-202011 107 258
- US-A- 3 611 908

## Beschreibung

Die Erfindung betrifft eine Einrichtung zum Belüften, zum Heizen und/oder zum Kühlen eines Raumes mit zumindest einem Lufteinlass zum Zuführen von Primärluft, mit zumindest einem Luftauslassbereich zum Austritt der Luft in den Raum sowie mit zumindest einem Induktionsbereich, in den der Lufteinlass mündet und der zumindest teilweise durch wenigstens einen Wärmeübertrager begrenzt wird, so dass durch die aus dem Lufteinlass in den Induktionsbereich austretende Primärluft Sekundärluft über zumindest einen der Wärmeübertrager induziert wird und die Primärluft und die Sekundärluft als Mischluft über den Luftauslassbereich in den Raum abgegeben werden. Ein solcher Stand der Technik ist zum Beispiel aus der DE202011107258U1 bekannt. Eine entsprechende Einrichtung ist beispielsweise auf dem Boden längs einer Raumwand eines zu belüftenden Raumes angeordnet. Die Primärluft wird von unten über einen Zuführkanal in den Lufteinlass geführt, wobei der Lufteinlass im Bereich der unteren Kante des Wärmeübertragers angeordnet ist. Der Wärmeübertrager begrenzt einen Induktionsbereich. Durch die aus dem Lufteinlass in den Induktionsbereich strömende Primärluft wird über den Wärmeübertrager Sekundärluft induziert. Der Luftauslassbereich ist im oberen Bereich der Einrichtung vorgesehen.

Die Primärluft strömt durch den Lufteinlass in den Induktionsbereich. Das dadurch entstehende Druckgefälle gegenüber dem Umgebungsdruck sorgt für eine Induktion von Sekundärluft über den Wärmeübertrager. Die Mischung aus Primärluft und induzierter Sekundärluft strömt als Mischluft über den Luftauslassbereich oberseitig in den Raum aus. Derartige Auslässe können im Wohnbereich als auch im Nichtwohnbereich zur Abführung hoher Wärmelasten eingesetzt werden. Um unerwünscht hohe Luftgeschwindigkeiten in der nahen Umgebung der Einrichtung zu vermeiden, ist die Zuführung von Primärluft beschränkt. Aus der US-PS 3,611,908 ist eine Anschlusseinheit für eine Klimaanlage zum Einbringen von Luft bekannt.

Aufgabe der Erfindung ist es, die vorgenannten Nachteile zu vermeiden und eine Einrichtung anzugeben, die mit begrenztem Primärluftanteil durch Sekundärluftinduktion über einen Wärmeübertrager hohe thermische Lasten abführt.

Diese Aufgabe wird dadurch gelöst, dass der Lufteinlass in eine sich in den Induktionsbereich hineinerstreckende Verteilkammer mündet, die durch wenigstens eine Innenwandung in zumindest zwei Verteilbereiche unterteilt ist, wobei jeder der Verteilbereiche zumindest eine, insbesondere als Düse ausgebildete, Ausblasöffnung aufweist und in jeder Innenwandung zumindest eine durch eine Stelleinrichtung in ihrer Größe veränderbare, insbesondere vollständig öffenbare und vorzugsweise vollständig verschließbare, Öffnung vorgesehen ist.

Die Stelleinrichtung kann die ihr zugeordnete Öffnung in der Schließstellung vollständig verschließen, so dass dann beide Verteilbereiche in der Schließstellung vollständig gegeneinander verschlossen sind. Es ist aber auch durchaus möglich, dass auch in der Schließstellung der Stelleinrichtung noch eine Restöffnung verbleibt, so dass in der Schließstellung nur noch ein dem Strömungsquerschnitt dieser Restöffnung entsprechender Primärluftstrom in den angrenzenden Verteilbereich strömen kann.

Durch die erfindungsgemäße Ausgestaltung können bezogen auf die Abmessung der Einrichtung höhere thermische Leistungen erzielt werden. Auch wird der Leistungsbereich erweitert.

Vorzugsweise ist der Wärmeübertrager im Bereich der Frontseite der Einrichtung vorgesehen, so dass auf diese Weise optimal Sekundärluft aus dem Raum induziert werden kann. Vorzugsweise sind in jedem Verteilbereich eine Vielzahl an nebeneinander angeordneten, sich über die betreffende Wandung des Verteilbereichs erstreckende Düsen vorgesehen. Gegenüber einer bekannten einseitigen Ausblasrichtung kann mit der erfindungsgemäßen Ausgestaltung eine deutlich höhere Induktion erreicht werden.

Jede Stelleinrichtung ermöglicht eine Einstellung derart, dass die Primärluft entweder nur über einen Verteilbereich oder über zwei durch die betreffende Innenwandung voneinander getrennte Verteilbereiche in den Induktionsbereich ausströmt. Durch die Unterteilung der Verteilkammer kann der Leistungsbereich der Einrichtung somit erweitert werden.

Vorzugsweise kann die Verteilkammer länglich ausgebildet sein und insbesondere einen rechteckigen Querschnitt aufweisen. Bei einer solchen Ausgestaltung bietet sich an, wenn sich der Wärmeübertrager etwa über die ganze Länge der Verteilkammer erstreckt. Ferner bietet sich an, wenn die Verteilkammer im Bereich sämtlicher Seitenwandungen, die orthogonal zur Längserstreckung des Wärmeübertragers ausgerichtet sind, vorzugsweise gleichmäßig verteilt angeordnete Ausblasöffnungen aufweist. Damit kann je nach Stellung der Stelleinrichtung die Primärluft allseitig in den Induktionsbereich eingeblasen werden.

Vorzugsweise erstreckt sich die Verteilkammer auf den zu belüftenden Raum bezogen horizontal.

Bei einem bevorzugten Ausführungsbeispiel der Erfindung erstreckt sich zumindest eine Innenwandung auf den zu belüftenden Raum bezogen horizontal. Sofern eine solche Innenwandung vorgesehen ist, wird die Verteilkammer - bezogen auf den zu belüftenden Raum - horizontal in zwei übereinander angeordnete Verteilbereiche unterteilt. Sollte die Verteilkammer länglich mit einem rechteckigen Querschnitt ausgebildet sein und sollten in allen vier orthogonal zum Wärmeübertrager ausgerichteten Seitenwandungen der Verteilkammer Ausblasöffnungen vorgesehen sein, könnte damit über den oberen Verteilbereich die Primärluft nach oben und zur Seite und über den unteren Verteilbereich die Primärluft nach unten und zur Seite ausgeblasen werden.

Vorzugsweise ist der Induktionsbereich, insbesondere auf der dem Wärmeübertrager gegenüberliegenden Seite, durch eine Raumwand begrenzt. Eine solche Ausführungsform bietet sich an, wenn die erfindungsgemäße Einrichtung vor einer Raumwand angeordnet ist. Auf der der Raumwand gegenüberliegenden Seite ist der Induktionsbereich vorzugsweise durch einen dem Raum zugewandten Wärmeübertrager begrenzt.

Der Induktionsbereich kann seitlich und oberseitig zur Bildung des Luftauslassbereiches offen ausgebildet sein. Es ist aber auch eine Verkleidung gegebenenfalls mit entsprechenden Ausnehmungen für das Ansaugen der Sekundärluft und/oder das Austreten der Mischluft denkbar.

Zumindest eine Stelleinrichtung kann als, insbesondere motorisch antreibbare, Klappe ausgebildet sein.

Es bietet sich an, wenn zumindest eine Stelleinrichtung als selbstregelnde Klappe ausgebildet ist, die durch den Primärluftvolumenstrom gegen eine Kraft, insbesondere ihre Schwerkraft und/oder eine Rückstellkraft, aus ihrer Schließstellung in ihre Offenstellung verlagerbar ist. Zumindest eine Klappe kann auch mehrteilig, beispielsweise aus zwei Klappenhälften, bestehen. Bei einer solchen Ausführungsform ist die Stelleinrichtung beispielsweise auf der Abströmseite der betreffenden Innenwandung angeordnet. Wird ein gewisser Primärluftstrom überschritten, wird die Klappe gegen ihre Rückstellkraft aus ihrer Schließstellung in ihre Offenstellung verlagert, so dass damit Primärluft in beide durch diese Stelleinrichtung gegeneinander verschließbare Verteilbereiche strömt.

Zumindest eine Klappe kann aus einem Gewebe, einer Folie oder dergleichen bestehen. Es bietet sich an, wenn die Klappe eine gewisse Flexibilität aufweist, damit die Klappe auch nur in Teilbereichen aus ihrer Schließstellung heraus verschwenkbar ist. Das Gewebe oder auch die Folie kann zusätzlich eine Verstärkung beispielsweise in Form eines Gitters oder Rahmens aufweisen.

Selbstverständlich kann die Einrichtung auch als Sekundärluftgerät eingesetzt werden. In diesem Fall handelt es sich auch bei der "Primärluft" um Sekundärluft (Umluft). Die aus zumindest einer Ausblasöffnung in den Induktionsbereich eintretende Raumluft("Primärluft") induziert Sekundärluft über den Wärmeübertrager. Die Raumluft("Primärluft") und die Sekundärluft treten dann als Mischluft über den Luftauslassbereich in den Raum aus.

Es bietet sich insbesondere bei einer als Sekundärluftgerät eingesetzten Einrichtung an, wenn in dem Lufteinlass und/oder in einem dem Lufteinlass in Strömungsrichtung gesehen vorgelagerten Zuführkanal zumindest ein Ventilator angeordnet ist. Dieser kann die "Primärluft" (Sekundärluft, Umluft) aus dem Raum ansaugen.

Die Einrichtung kann in dem, dem Raum zugewandten Bereich eine Verkleidung, insbesondere eine Ausnehmungen zum Ansaugen von Raumlauft und/oder zum Austritt von Mischluft aufweisende Verkleidung, aufweisen.

Im Folgenden werden in den Zeichnungen dargestellte Ausführungsbeispiele der Erfindung erläutert. Es zeigen:
- Fig. 1: eine Seitenansicht auf eine erfindungsgemäße Einrichtung mit einer in der Offenstellung befindlichen Stelleinrichtung,
- Fig. 2: eine Rückansicht ohne Rückwand auf den Gegenstand nach Fig. 1,
- Fig. 3: den Gegenstand nach Fig. 2 in der Schließstellung und
- Fig. 4: ein Ausführungsbeispiel einer erfindungsgemäßen als Sekundärluftgerät ausgebildeten Einrichtung.

In allen Figuren werden für gleiche bzw. gleichartige Bauteile übereinstimmende Bezugszeichen verwendet.

Die Figuren zeigen eine Einrichtung, die vor einer Raumwand 1 auf einem Raumboden 2 angeordnet ist. Die Einrichtung weist einen Lufteinlass 3 zum Zuführen von Primärluft aus, der an einem in einem Zwischenboden 4 befindlichen Zuführkanal 5 angeschlossen ist und der in einen Induktionsbereich 6 der Einrichtung mündet.

Der Induktionsbereich 6 der Einrichtung wird raumseitig durch einen Wärmeübertrager 7 und rückseitig durch die Raumwand 1 begrenzt. Die Einrichtung weist einen Luftauslassbereich 8 auf, der in dem dargestellten Ausführungsbeispiel durch die offenen Seiten sowie durch die offene Oberseite der Einrichtung gebildet wird. Die Einrichtung weist eine Verkleidung 21 mit nicht dargestellten Ausnehmungen zum Ansaugen von Raumluft 19 bzw. zum Austritt von Mischluft 20 auf.

Der Lufteinlass 3 mündet in eine in dem Induktionsbereich 6 angeordnete Verteilkammer 9. Die Verteilkammer 9 erstreckt sich auf den zu belüftenden Raum bezogen horizontal und ist länglich ausgebildet. Sie weist einen rechteckigen Querschnitt auf. Vorzugsweise erstreckt sich der Wärmeübertrager 7 über die komplette Länge der Verteilkammer 9.

Die Verteilkammer 9 weist eine sich bezogen auf den zu lüftenden Raum horizontal erstreckende Innenwandung 10 auf, die die Verteilkammer 9 in einen oberen Verteilbereich 11 und einen unteren Verteilbereich 12 unterteilt.

In der Innenwandung 10 ist in dem dargestellten Ausführungsbeispiel in Verlängerung des Lufteinlasses 3 eine Öffnung 13 vorgesehen, die durch eine Stelleinrichtung 14 öffenbar und verschließbar ist.

In dem dargestellten Ausführungsbeispiel ist die Stelleinrichtung 14 als selbstregende Klappe ausgebildet, die aus zwei Klappenhälften besteht. Jede Klappenhälfte ist um eine Achse 15 in Richtung der Pfeile 16 aus ihrer Schließstellung in ihre Offenstellung verschwenkbar gelagert.

In den vier orthogonal zur Längserstreckung des Wärmeübertragers 7 ausgerichteten Seitenwandungen der Verteilkammer 9 sind eine Vielzahl als Düsen ausgebildete Ausblasöffnungen 17 vorgesehen. Die Ausblasöffnungen 17 sind vorzugsweise gleichmäßig verteilt über die betreffende Seitenwandung der Verteilkammer 9 angeordnet. Über diese Ausblasöffnungen 17 kann aus jedem Verteilbereich 11, 12 Primärluft (Pfeil 18) in den Induktionsbereich 6 austreten. Auf diese Weise kann Sekundärluft (Pfeil 19) über den Wärmeübertrager 7 induziert werden. Die Primärluft 18 und die Sekundärluft 19 treten als Mischluft 20 über den Luftauslassbereich 8 in den Raum aus.

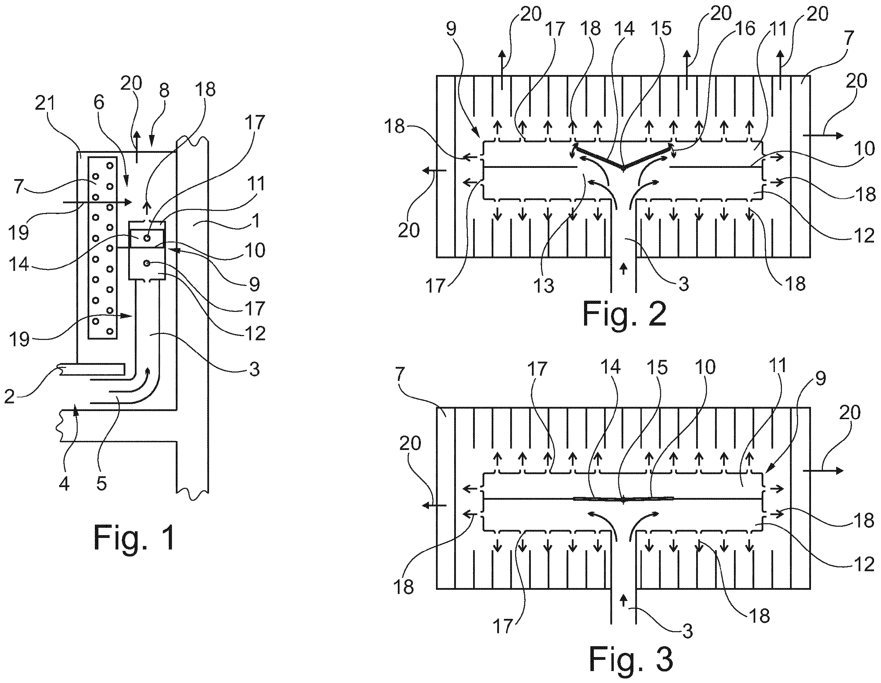

Durch den Primärluftstrom 18 kann jede Hälfte der Klappe gegen ihre Rückstellkraft, beispielsweise ihre Schwerkraft, aus ihrer in Figur 3 dargestellten Schließstellung in die in Figur 2 dargestellte Offenstellung verschwenkt werden.

Bei geringen Zuführraten an Primärluft 18 ist die Schwerkraft jeder Hälfte der Klappe größer als der durch die Primärluft 18 auf die betreffende Klappe wirkende Druck, so dass die Primärluft 18 lediglich über die Ausblasöffnungen 17 in dem unteren Verteilbereich 12 in Richtung der Pfeile 18 in den Induktionsbereich 6 eintritt und entsprechend Sekundärluft 19 durch den Wärmeübertrager 7 induziert. Die Primärluft 18 und die induzierte Sekundärluft 19 werden dann als Mischluft 20 über den umlaufenden Luftauslassbereich 8 in den Raum abgegeben.

Bei erhöhtem Primärluftanteil steigt der Druck in dem unteren Verteilbereich 12 an, so dass sich die Stelleinrichtung 14 mehr und mehr öffnet und damit den oberen Verteilbereich 11 freigibt. Wie in Figur 2 dargestellt, tritt bei geöffneter Stelleinrichtung 14 allseitig über beide Verteilbereiche 11, 12 Primärluft 18 in den Induktionsbereich 6 ein. Die Sekundärluftinduktion wird auf diese Weise angehoben und der Wärmeübertrager 7 großflächiger durchströmt, wodurch der thermische Leistungsbereich deutlich erweitert wird.

Durch die erfindungsgemäße Ausgestaltung können große Luftmengen mit niedrigen Luftgeschwindigkeiten in der Nähe der Einrichtung in den Raum eingebracht werden, so dass ein Aufenthalt ohne Komforteinbuße auch in unmittelbarer Nähe der Einrichtung möglich ist. Insbesondere bei einem allseitigen Ausblasen bei geöffneter Stelleinrichtung 14 können hohe Induktionsraten erzielt werden.

Statt einer selbsttätigen bzw. durch die Strömungsenergie arbeitenden Stelleinrichtung 14 kann selbstverständlich auch eine motorisch angetriebene Stelleinrichtung 14 eingesetzt werden. Die erfindungsgemäße Einrichtung kann beispielsweise im Brüstungsbereich, so wie in Fig. 1 dargestellt ist, oder auch im Deckenbereich eingesetzt werden.

Die in den Figuren 1 bis 3 dargestellte Einrichtung ist als Primärluftgerät ausgebildet.

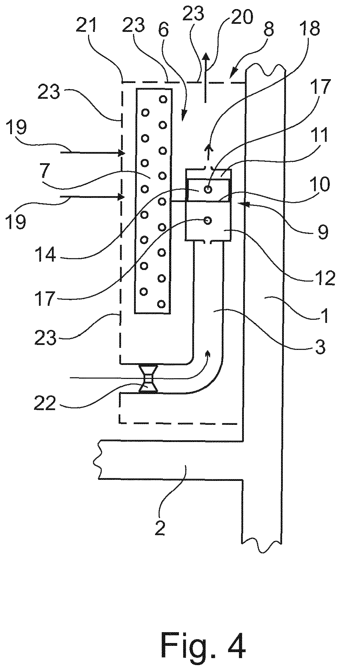

In Fig. 4 ist ein Ausführungsbeispiel einer erfindungsgemäßen Einrichtung dargestellt, die als Sekundärluftgerät eingesetzt wird. Die Einrichtung ist vor einer Raumwand 1 im Abstand zum Raumboden 2 angeordnet. Im Bereich des Lufteinlasses 3 ist ein Ventilator 22 vorgesehen, der Raumluft ("Primärluft") direkt aus dem Raum ansaugt. Die Einrichtung weist eine Verkleidung 21 mit Ausnehmungen 23 zum Ansaugen von Raumlauft 19 bzw. zum Austritt von Mischluft 20 auf. Die verbleibende Konstruktion der Einrichtung gemäß Fig. 4 entspricht der Konstruktion der Einrichtung gemäß den Fig. 1 bis 3.

Die über den Lufteinlass 3 durch den Ventilator 22 in die Verteilkammer 7 angesaugte Raumluft ("Primärluft") tritt je nach Stellung der Stelleinrichtung 14 nur über die Ausblasöffnungen 17 des unteren Verteilbereichs 12 und eventuell auch über die Ausblasöffnungen 17 des oberen Verteilbereichs 11 als Raumluft("Primärluft") (Pfeil 18) in den Induktionsbereich 6 aus. Dadurch wird Sekundärluft (Pfeil 19) über den Wärmeübertrager 7 induziert. Die Raumluft("Primärluft") 18 und die Sekundärluft 19 treten als Mischluft 20 über den Luftauslassbereich 8 in den Raum aus.

## Patentansprüche

1. Einrichtung zum Belüften, zum Heizen und/oder zum Kühlen eines Raumes mit zumindest einem Lufteinlass (3) zum Zuführen von Primärluft (18), mit zumindest einem Luftauslassbereich (8) zum Austritt der Luft in den Raum sowie mit zumindest einem Induktionsbereich (6), in den der Lufteinlass (3) mündet und der zumindest teilweise durch wenigstens einen Wärmeübertrager (7) begrenzt wird, so dass durch die aus dem Lufteinlass (3) in den Induktionsbereich (6) austretende Primärluft (18) Sekundärluft (19) über zumindest einen der Wärmeübertrager (7) induziert wird und die Primärluft (18) und die Sekundärluft (19) als Mischluft (20) über den Luftauslassbereich (8) in den Raum abgegeben werden, **dadurch gekennzeichnet, dass** der Lufteinlass (3) in eine sich in den Induktionsbereich (6) hineinerstreckende Verteilkammer (9) mündet, die durch wenigstens eine Innenwandung (10) in zumindest zwei Verteilbereiche (11, 12) unterteilt ist, wobei jeder der Verteilbereiche (11, 12) zumindest eine, insbesondere als Düse ausgebildete, Ausblasöffnung (17) aufweist und in jeder Innenwandung (10) zumindest eine durch eine Stelleinrichtung (14) in ihrer Größe veränderbare, insbesondere vollständig öffenbare und vorzugsweise vollständig verschließbare, Öffnung (13) vorgesehen ist.

2. Einrichtung zum Belüften nach dem vorhergehenden Anspruch, **dadurch gekennzeichnet, dass** die Verteilkammer (9) länglich ausgebildet ist und insbesondere einen rechteckigen Querschnitt aufweist.

3. Einrichtung zum Belüften nach einem der vorhergehenden Ansprüche, **dadurch gekennzeichnet, dass** sich die Verteilkammer (9) auf den zu belüftenden Raum bezogen horizontal erstreckt.

4. Einrichtung zum Belüften nach dem vorhergehenden Anspruch, **dadurch gekennzeichnet, dass** sich zumindest eine Innenwandung (10) auf den zu belüftenden Raum bezogen horizontal erstreckt.

5. Einrichtung zum Belüften nach einem der vorhergehenden Ansprüche, **dadurch gekennzeichnet, dass** der Induktionsbereich (6), insbesondere auf der dem Wärmeübertrager (7) gegenüberliegenden Seite, durch eine Raumwand (1) begrenzt ist.

6. Einrichtung zum Belüften nach einem der vorhergehenden Ansprüche, **dadurch gekennzeichnet, dass** zumindest eine Stelleinrichtung (14) als, insbesondere motorisch antreibbare, Klappe ausgebildet ist.

7. Einrichtung zum Belüften nach einem der vorhergehenden Ansprüche, **dadurch gekennzeichnet, dass** zumindest eine Stelleinrichtung (14) als selbstregelnde Klappe ausgebildet ist, die durch den Primärluftvolumenstrom gegen eine Kraft, insbesondere ihre Schwerkraft und/oder eine Rückstellkraft, aus ihrer Schließstellung in ihre Offenstellung verlagerbar ist.

8. Einrichtung zum Belüften nach einem der Ansprüche 6 oder 7, **dadurch gekennzeichnet, dass** zumindest eine Klappe aus einem Gewebe, einer Folie oder dergleichen besteht.

9. Einrichtung zum Belüften nach einem der vorhergehenden Ansprüche, **dadurch gekennzeichnet, dass** die Einrichtung als Sekundärluftgerät ausgebildet ist.

10. Einrichtung zum Belüften nach dem vorhergehenden Anspruch, **dadurch gekennzeichnet, dass** in dem Lufteinlass 3 und/oder in einem dem Lufteinlass 3 in Strömungsrichtung gesehen vorgelagerten Zuführkanal 5 zumindest ein Ventilator angeordnet ist.

11. Einrichtung zum Belüften nach einem der vorhergehenden Ansprüche, **dadurch gekennzeichnet, dass** die Einrichtung in dem dem Raum zugewandten Bereich eine Verkleidung 21, insbesondere eine Ausnehmungen 23 zum Ansaugen von Raumlauft 19 und/oder zum Austritt von Mischluft 20 aufweisende Verkleidung 21, aufweist.

## Claims

1. Device for ventilating, heating, and/or cooling a room, with at least one air inlet (3) for supplying primary air (18), with at least one air outlet area (8) for the outlet of the air in the room, and with at least one induction area (6), into which the air inlet (3) opens and which is at least partially delimited by at least one heat exchanger (7) such that, due to the primary air (18) emerging from the air inlet (3) into the induction area (6), secondary air (19) is inducted via at least one of the heat exchangers (7), and the primary air (18) and the secondary air (19) are emitted as mixed air (20) via the air outlet region (8) into the room, **characterised in that** the air inlet (3) opens into a distribution chamber (9) extending into the induction area (6), which is subdivided by at least one inner wall (10) into at least two distribution areas (11, 12), wherein each of the distribution areas (11, 12) comprises at least one outflow blower opening (17), configured as a nozzle, and provided in each inner wall (10) is at least one opening (13), the size of which can be changed by an adjustment device (14), in particular being capable of opening completely and preferably capable of being closed completely.

2. Device for ventilating in accordance with the preceding claim, **characterised in that** the distribution chamber (9) is configured as longitudinal, and in particular exhibits a rectangular cross-section.

3. Device for ventilating in accordance with any one of the preceding claims, **characterised in that** the distribution chamber (9) extends on the horizontal plane drawn through the room which is to be ventilated.

4. Device for ventilating in accordance with one of the preceding claims, **characterised in that** at least one inner wall (10) extends on the horizontal related to the room which is to be ventilated.

5. Device for ventilating in accordance with any one of the preceding claims, **characterised in that** the induction area (6), in particular on the side opposite the heat exchanger (7), is delimited by a room wall (1).

6. Device for ventilating in accordance with any one of the preceding claims, **characterised in that** at least one adjustment device (14) is configured as a flap, in particular such as can be driven by a motor.

7. Device for ventilating in accordance with any one of the preceding claims, **characterised in that** at least one adjustment device (14) is configured as a self-regulating flap, which can be displaced by the primary air volume flow against a force, in particular its own gravitational force and/or a resetting force, out of its closed position into its open position.

8. Device for ventilating in accordance with any one of claims 6 or 7, **characterised in that** at least one flap consists of a fabric, a film, or the like.

9. Device for ventilating in accordance with any one of the preceding claims, **characterised in that** the device is configured as secondary air apparatus.

10. Device for ventilating in accordance with one of the preceding claims, **characterised in that** at least one ventilator or fan is arranged in the air inlet 3 and/or in a delivery channel 5, upstream of the air inlet 3 seen in the direction of flow.

11. Device for ventilating in accordance with any one of the preceding claims, **characterised in that** the device comprises, in the area facing towards the room, a cladding 21, in particular a cladding 21 exhibiting cut-out openings 23 for the intake suction of room air 19 and/or for the outlet of mixed air 20.

## Revendications

1. Dispositif de ventilation, de chauffage et/ou de refroidissement d'une pièce avec au moins une entrée d'air (3) pour l'amenée d'air primaire (18), avec au moins une sortie d'air (8) pour la sortie de l'air dans la pièce, ainsi qu'avec au moins une zone d'induction (6) dans lequel l'entrée d'air (3) débouche et qui est limitée au moins partiellement par au moins un échangeur de chaleur (7), de sorte que de l'air secondaire (19) est induit par l'air primaire (18) sortant de l'entrée d'air (3) dans la zone d'induction (6) par l'intermédiaire d'au moins un des échangeurs de chaleur (7), et que l'air primaire (18) et l'air secondaire (19) sont délivrés dans la pièce sous forme d'air mélangé (20) par l'intermédiaire de la sortie d'air (8), **caractérisé en ce que** l'entrée d'air (3) débouche dans une chambre de distribution (9) qui s'étend à l'intérieur de la zone d'induction (6) et qui est divisée en au moins deux zones de distribution (11, 12) par au moins une paroi intérieure (10), chacune des zones de distribution (11, 12) présentant au moins une ouverture de soufflage (17), en particulier réalisée sous la forme d'une buse, et que dans chaque paroi intérieure (10) est prévue au moins une ouverture (13) de taille variable, en particulier pouvant être complètement ouverte et de préférence complètement fermée par un dispositif de réglage (14).

2. Dispositif de ventilation selon la revendication précédente, **caractérisé en ce que** la chambre de distribution (9) est de forme allongée et présente en particulier une section transversale rectangulaire.

3. Dispositif de ventilation selon l'une des revendications précédentes, **caractérisé en ce que** la chambre de distribution (9) s'étend horizontalement par rapport à la pièce à ventiler.

4. Dispositif de ventilation selon la revendication précédente, **caractérisé en ce qu'**au moins une paroi intérieure (10) s'étend horizontalement par rapport à la pièce à ventiler.

5. Dispositif de ventilation selon l'une des revendications précédentes, **caractérisé en ce que** la zone d'induction (6) est limitée par une paroi de pièce (1), en particulier du côté opposé à l'échangeur de chaleur (7).

6. Dispositif de ventilation selon l'une des revendications précédentes, **caractérisé en ce qu'**au moins un dispositif de réglage (14) est réalisé sous la forme d'un clapet, en particulier entraîné par un moteur.

7. Dispositif de ventilation selon l'une des revendications précédentes, **caractérisé en ce qu'**au moins un dispositif de réglage (14) est conçu comme un clapet autoréglable qui peut être déplacé par le débit volumique d'air primaire contre une force, en particulier sa force de gravité et/ou une force de rappel, de sa position de fermeture dans sa position d'ouverture.

8. Dispositif de ventilation selon l'une des revendications 6 ou 7, **caractérisé en ce qu'**au moins un clapet est constitué d'un tissu, d'une feuille ou analogue.

9. Dispositif de ventilation selon l'une des revendications précédentes, **caractérisé en ce que** le dispositif est conçu comme un appareil à air secondaire.

10. Dispositif de ventilation selon la revendication précédente, **caractérisé en ce qu'**au moins un ventilateur est disposé dans l'entrée d'air 3 et/ou dans un canal d'alimentation 5 placé en amont de l'entrée d'air 3 vu dans le sens d'écoulement.

11. Dispositif de ventilation selon l'une des revendications précédentes, **caractérisé en ce que** le dispositif présente dans la zone tournée vers la pièce un habillage 21, en particulier un habillage 21 présentant des évidements 23 pour aspirer l'air de la pièce 19 et/ou pour délivrer de l'air mélangé 20.
